Europäisches Patentamt

European Patent Office

Office européen des brevets

(19)

(11) Veröffentlichungsnummer: **0 176 057 B1**

# (12) EUROPÄISCHE PATENTSCHRIFT

(45) Veröffentlichungstag der Patentschrift: **21.08.91**

(51) Int. Cl.⁵: **A01D 90/10**, A01F 29/00

(21) Anmeldenummer: **85111965.1**

(22) Anmeldetag: **23.09.85**

(54) **Zerkleinerungsvorrichtung für organische Abfallmaterialien.**

(30) Priorität: **25.09.84 DE 8428150 U**

(43) Veröffentlichungstag der Anmeldung:
**02.04.86 Patentblatt 86/14**

(45) Bekanntmachung des Hinweises auf die
Patenterteilung:
**21.08.91 Patentblatt 91/34**

(84) Benannte Vertragsstaaten:
**AT CH DE FR GB IT LI NL SE**

(56) Entgegenhaltungen:
**DE-B- 1 213 792      DE-B- 1 239 626**
**DE-C- 285 239        GB-A- 2 024 590**
**GB-A- 2 109 213      NL-A- 6 508 842**
**US-A- 3 512 668**

(73) Patentinhaber: **Willibald, Josef**
**Frickinger Strasse 97**
**W-7771 Frickingen 2 Altheim(DE)**

(72) Erfinder: **Willibald, Josef**
**Frickinger Strasse 97**
**W-7771 Frickingen 2 Altheim(DE)**

(74) Vertreter: **Seemann, Norbert W.**
**Brehmstrasse 37**
**W-7320 Göppingen(DE)**

## Beschreibung

Die Erfindung bezieht sich auf eine Vorrichtung nach dem Oberbegriff des Patentanspruchs 1. Sie geht dabei aus von einem System nach der DE-A-32 32 905, aus der es bei einem landwirtschaftlichen Ladewagen bereits bekannt ist, am Ende des Laderaumes neben einer walzenartigen Vorrichtung zum dosierten Entladen landwirtschaftlicher Massengüter, auch eine sogenannte Nachzerkleinerungseinrichtung anzuordnen; letztere eignet sich von ihrem speziellen Aufbau und der baulichen Anordnung her allerdings nur für den Einsatz bei leichtem landwirtschaftlichen Halm- oder Blattgut. Gleiches gilt auch für das aus der GB-A-2 109 213 bekannte Einzugssystem eines Feldhäckslers, das zwar über eine Schwinge mit Kulissenführung höhenbeweglich im Einzugsschacht gelagert ist, jedoch nicht mit einem festen Kratzboden zusammenwirkt, sondern mit einem gegenüberliegenden, weiteren Walzenpaar im Einzugsbereich.

Die Aufgabe der vorliegenden Erfindung soll deshalb auch darin bestehen, diesen an sich bekannten Grundgedanken nunmehr insbesondere für im Arbeitseinsatz stationär betriebene Geräte ohne Ladewagenfunktion nutzbar zu machen, insbesondere also für die Zerkleinerung von Friedhofsabfällen, Schnitt- und Astholz bzw. Reisig aus der Obst- bzw. Forstwirtschaft zwecks anschließender Kompostierung oder ähnlichen Einsatzgebieten des privaten bzw. kommunalen Bereichs.

Der hierbei vorgeschlagene Lösungsweg ist im Patentanspruch 1 niedergelegt, anhand eines Ausführungsbeispiels in den Zeichnungen weitestgehend schematisch dargestellt und zudem im folgenden näher beschrieben.

Es zeigen:

Fig. 1    ein erfindungsgemäßes Gerät als Seitenansicht und teilweise im Längsschnitt, und

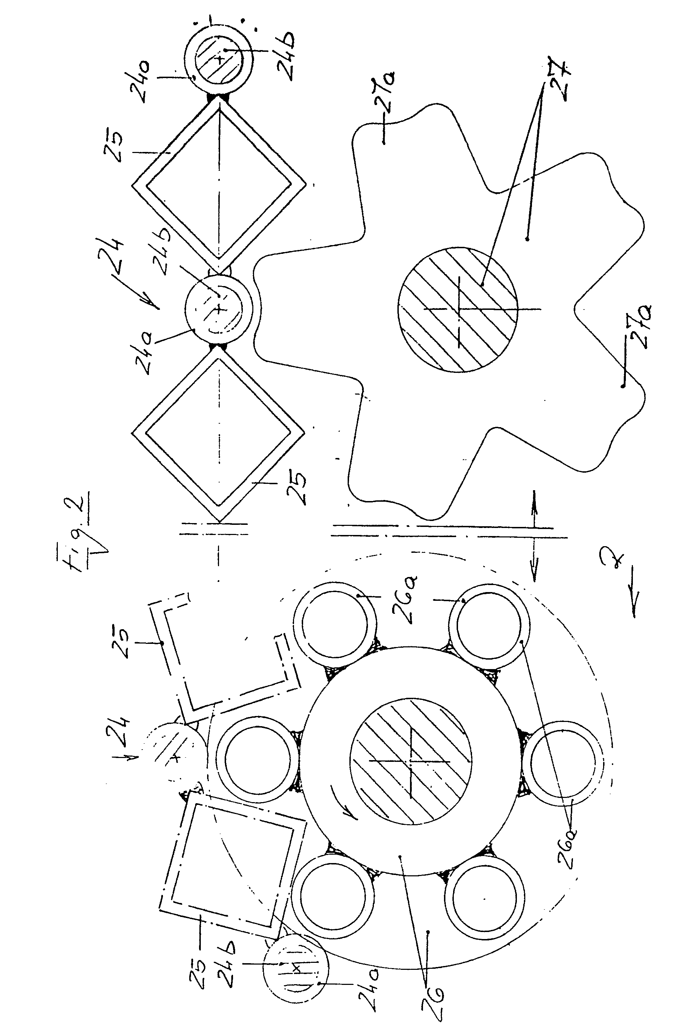

Fig. 2    eine Teilansicht des Kratzbodens als Einzelheit.

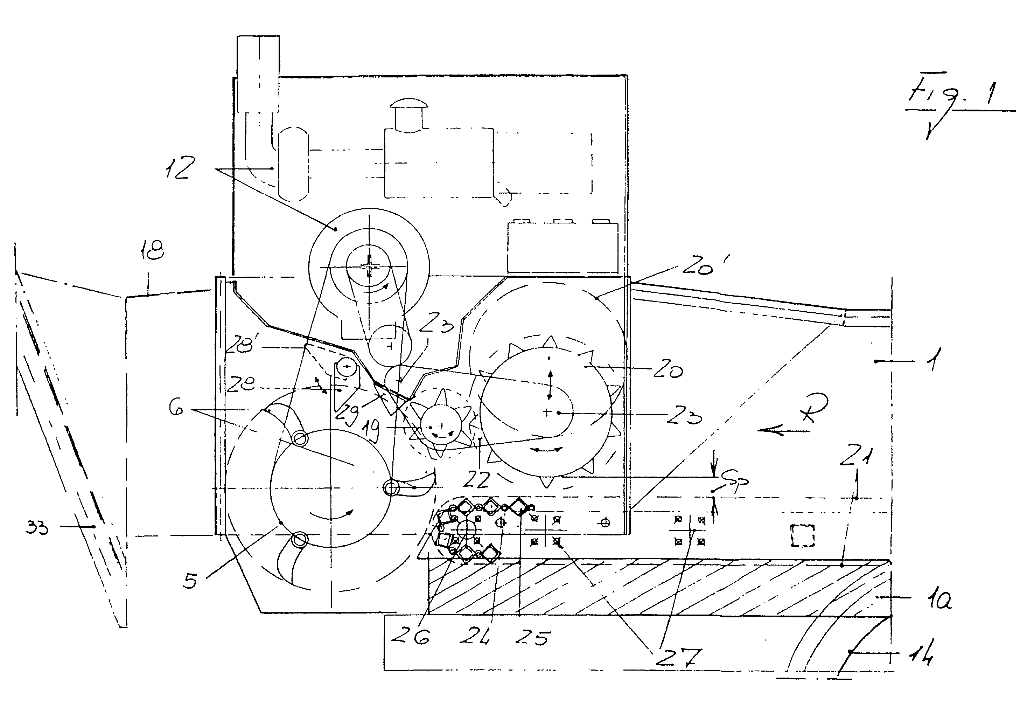

Gemäß der zeichnerischen Darstellung ergibt sich aus Fig. 1 im Grundaufbau eine Zerkleinerungsvorrichtung für organische Abfallmaterialien, bestehend aus einem Laderaum 1 mit mechanisch angetriebenem Kratzboden 21, Dosierwalzenpaar 19, 20 und diesem nachgeordneten, eigentlichen Zerkleinerungsaggregat 5, 6 an einem der Laderäumenden, wobei im speziellen vorgesehen ist, daß als Zerkleinerungsaggregat ein Schlegelmulchgerät mit rotierender Arbeitswelle 5 und freipendelnden Arbeitsschlegeln 6 dient.

Sämtliche Grundaggregate 5, 6 sowie 21 sind dabei separat jedoch von ein und demselben Hauptantrieb, hier dem Aufsatzmotor 12, antreibbar mit letzterem verbunden.

Vervollständigt wird die vorliegende Vorrichtung letztlich noch durch Zuordnung eines hier nur angedeuteten Fahrwerks 14 sowie eines eigenen, nicht dargestellten Ladegreifers an der Ladepritsche bzw. dem Grundrahmen 1.

Der Austrag des zerkleinerten Materials erfolgt durch den strichpunktiert angedeuteten Auswurfkanal 18, dessen Öffnung aus Sicherheitsgründen über der Kopfhöhe eines Menschen liegen sollte; denkbar zudem ist noch die Zuordnung irgendeines Siebes 33 am Ende des Auswurfkanals 18 zum Absieben gröberen Materials, das dann erneut mit dem Greifer aufgenommen und dem Zerkleinerungsaggregat 5, 6 nochmals zugeführt werden kann.

Die besonders vorteilhafte, bauliche Ausgestaltung der Erfindung ist gemäß Darstellung in Fig. 1 insbesondere dadurch gegeben, daß das Dosierwalzenpaar 19, 20 in Arbeitsrichtung "R" des Kratzbodens 21 gesehen hintereinander und oberhalb des letzteren auf einer Schwinge 22 als Einheit höhenbeweglich gelagert ist, wobei sich der Drehpunkt 23 dieser Schwinge 22 oberhalb des Kratzbodens 21 und der Schlegelumlaufbahn 6' befindet sowie die dem eigentlichen Zerkleinerungsaggregat 5, 6 benachbarte Einzugswalze 19 einen kleineren Durchmesser als die am freien Ende der Schwinge 22 liegende Dosierwalze 20 hat.

Gemäß der Darstellung in Fig. 4 ergibt sich eine besonders einfache und wirkungsvolle Ausgestaltung des Kratzbodens 21 noch dadurch, daß dieser aus über Gelenke 24 miteinander verbundenen Rechteckstäben 25 besteht und die Gelenke 24 aus in Stablängsrichtung wechselweise an einander jeweils benachbarten Stäben 25 angebrachten Hülsen 24a bestehen, die von einer gemeinsamen Stange 24b durchsetzt sind, wobei zum Antrieb sowie zur Abstützung des Kratzbodens 21 einendig ein sogenanntes Stangenrad 26 sitzt, dessen Stangen 26a jeweils zwischen zwei der Kratzbodenstäbe 25 und die Arme 27a der sternförmigen Abstützwalzen 27 jeweils unter die Gelenke 24 greifen.

Vervollständigt für den praktischen Einsatz wird diese erfinderische Lösung zudem noch dadurch, daß dem Kratzboden 21 am Ende eine Abstreifvorrichtung mit seitlich in einem Kanal o.dgl. wirkender Förderschnecke zugeordnet ist und durch geräte- bzw. fahrzeugseitige Zuordnung von vorzugsweise ausschwenkbaren Schneidmessern 28, 29 zum Zerkleinerungsaggregat 5, 6.

Der Kratzboden 21 wird somit bei seiner Bewegungsumkehr einerseits ständig von anhaftenden Abfallmaterialien gereinigt und die Schneidmesser können andererseits bei Überlastung ausweichen bzw. zurückschwenken oder aber auch dann, wenn irgendwelche Metallteile o.ä. Fremdkörper in die Zerkleinerungsorgane 5, 6 gelangen sollten.

Bezugsziffernverzeichnis

| 1 | Laderaum |
|---|---|
| 1a | Grundrahmen |
| 5 | Arbeitswelle |
| 6 | Arbeitsschlegel |
| 6' | Schlegelumlaufbahn |
| 12 | Aufsatzmotor |
| 14 | Laufrad |
| 18 | Auswurfkanal |
| 19 | kleine Dosierwalze |
| 20 | große Dosierwalze |
| 21 | Kratzboden |
| 22 | Schwinge |
| 23 | Drehpunkt |
| 24 | Gelenk |
| 24a | Hülse |
| 24b | Stange |
| 25 | Rechteckstab |
| 26 | Stangenrad |
| 26a | Stange |
| 27 | Abstützwalze |
| 27a | Arme |
| 28 | Schneidmesser |
| 29 | Schneidmesser |
| 33 | Sieb |
| R | Kratzboden-Arbeitsrichtung |
| $S_p$ | Einzugsspalt |

## Patentansprüche

1. Zerkleinerungsvorrichtung für organische Abfallmaterialien, bestehend aus einem Laderaum (1) mit mechanisch angetriebenem Kratzboden (21), einem oberhalb des letzteren liegenden, Dosierwalzenpaar (19, 20) und einem diesem wiederum in Arbeitsrichtung nachgeordneten Zerkleinerungsaggregat (5, 6) an einem der Laderaumenden,

**dadurch gekennzeichnet,**

daß das Zerkleinerungsaggregat (5, 6) in an sich bekannter Weise als Schlegelmulchgerät mit rotierender Arbeitswelle (5) und freipendelnden Arbeitsschlegeln (6) ausgebildet und das aus Dosier- (20) sowie Einzugswalze (19) bestehende Walzenpaar (19,20) in Arbeitsrichtung (R) des Kratzbodens (21) hintereinander auf einer Schwinge (22) als Einheit höhenbeweglich gelagert ist, daß der Schwenkpunkt (23) der Schwinge (22) oberhalb des Kratzbodens (21) und der Schlegelumlaufbahn (6') liegt und daß die dem Zerkleinerungsaggregat (5, 6) benachbarte, eigentliche Einzuswalze (19) einen kleineren Durchmesser als die am freien Ende der Schwinge (22) liegende Dosierwalze (20) aufweist.

2. Zerkleinerungsvorrichtung nach Anspruch 1,

**dadurch gekennzeichnet,**

daß sämtliche Aggregate separat, jedoch von ein und demselben Aufsatzmotor (12) aus antreibbar sind.

3. Zerkleinerungsvorrichtung nach einem der vorhergehenden Ansprüche,

**dadurch gekennzeichnet,**

daß der Kratzboden (21) aus über Gelenke (24) miteinander verbundenen Rechteckstäben (25) besteht, wobei die Gelenke (24) aus in Stablängsrichtung wechselweise an einander jeweils benachbarten Stäben (25) angebrachten Hülsen (24a) bestehen, die von einer gemeinsamen Stange (24b) durchsetzt sind.

4. Zerkleinerungsvorrichtung nach Anspruch 3,

**dadurch gekennzeichnet,**

daß zum Antrieb sowie zur Abstützung des Kratzbodens (21) einendig ein sogenanntes Stangenrad (26) sitzt, dessen Stangen (26a) jeweils zwischen zwei der Kratzbodenstäbe (25) und die Arme (27a) der sternförmigen Abstützwalzen (27) jeweils unter die Gelenke (24) greifen.

5. Zerkleinerungsvorrichtung nach den Ansprüchen 3 und 4,

**dadurch gekennzeichnet,**

daß dem Kratzboden (21) einendig eine Abstreifvorrichtung mit seitlich in einem Kanal o. dgl. wirkender Förderschnecke zugeordnet ist.

6. Zerkleinerungsvorrichtung nach einem der Ansprüche 1 bis 5,

**gekennzeichnet durch**

Zuordnung eines Fahrwerks (14) sowie eines eigenen Ladegreifers an der Ladepritsche bzw. dem Grundrahmen (1a) sowie geräte- bzw. fahrzeugseitig vorzugsweise ausschwenkbarer Schneidmesser (28, 29) zum Zerkleinerungsaggregat (5,6).

## Claims

1. Comminuting device for organic waste materials, which consists of a charging space (1) with mechanically driven scraper conveyor (21), a metering roller pair (19, 20) lying above the latter and a comminuting unit (5, 6), which in its turn is arranged behind this in operating direction, at one of the charging space ends, characterised thereby, that the comminuting unit (5, 6) is constructed in in itself known manner as beater mill device with rotating working shaft (5) and freely pendulating working beaters (6) and the roller pair (19, 20), which consists of a metering roller (20) as well as an intake roller (19), are borne to be vertically movable as unit on a rocker (22) one behind the other in the operating direction (R) of the scraper conveyor (21), that the centre of gravity (23) of the rocker (22) lies above the scraper conveyor (21) and the beater circulation path (6') and that the actual intake roller (19), which is adjacent to the comminuting unit (5, 6), displays a smaller diameter than the metering roller (20) lying at the free end of the rocker (22).

2. Comminuting device according to claim 1, characterised thereby, that all units are drivable separately, but by one and the same attachment motor (12).

3. Comminuting device according to one of the preceding claims, characterised thereby, that the scraper conveyor (21) consists of rectangular bars (25) connected one with the other by way of links (24), wherein the links (24) consist of sleeves (24a), which are mounted at respectively adjacent bars (25) in alternation in longitudinal direction of the rod and which are penetrated by a common rod (24b).

4. Comminuting device according to claim 3, characterised thereby, that a so-called rod wheel (26), the rods (26a) of which engage each time below the links (24) respectively between each two of the scraper conveyor bars (25) and the arms (27a) of the star-shaped support rollers (27), sits at one end for the drive as well as the support of the scraper conveyor (21).

5. Comminuting device according to the claims 3 and 4, characterised thereby, that the scraper conveyor (21) is associated at one end with a stripper device with conveyor worm acting laterally in a channel or the like.

6. Comminuting device according to one of the claims 1 to 5, characterised by association of an undercarriage (14) as well as an own charging gripper at the charging platform or at the base frame (1a) as well as cutting blades (28, 29), which are at the side of the device or the vehicle and preferably pivotable out, with the scraper conveyor (21).

**Revendications**

1. Dispositif de hachage pour déchets organiques, composé d'une chambre de chargement (1) munie d'un fond de raclage (21) à entraînement mécanique, d'une paire de cylindres doseurs (19, 20) disposée au-dessus de ce dernier et d'un ensemble de hachage (5, 6) monté à son tour, en aval de celle-ci dans la direction de travail, à l'une des extrémités de la chambre de chargement, caractérisé par le fait :

que l'ensemble de hachage (5, 6) est réalisé, de manière connue en soi, sous la forme d'un appareil de battage à fléaux comprenant un arbre de travail tournant (5) et des fléaux de travail (6) qui pendent librement, et que la paire de cylindres (19, 20) composée d'un cylindre de dosage (20) et d'un cylindre d'alimentation (19) est montée en rotation comme un tout sur un balancier (22) en étant mobile en hauteur, les cylindres étant disposés l'un derrière l'autre dans la direction de travail (R) du fond de raclage (21),

par le fait que le point de pivotement (23) du balancier (22) est situé au-dessus du fond de raclage (21) et de la trajectoire circulaire (6') des fléaux, et :

par le fait que le cylindre d'alimentation (19) proprement dit qui est contigu à l'ensemble de hachage (5, 6) présente un plus faible diamètre que le cylindre de dosage (20) qui est situé à l'extrémité libre du balancier (22).

2. Dispositif de hachage selon la revendication 1, caractérisé par le fait que les ensembles peuvent être entraînés dans leur totalité de manière séparée, mais à partir d'un seul et même moteur rapporté (12).

3. Dispositif de hachage selon l'une des revendications précédentes, caractérisé par le fait que le fond de raclage (21) se compose de barres à section rectangulaire (25) qui sont reliées entre elles par l'intermédiaire d'articulations (24), les articulations (24) se composant de manchons (24a) qui sont posés alternativement dans la direction longitudinale des barres sur des barres à chaque fois voisines (25) et qui sont traversés par une tige commune (24b).

4. Dispositif de hachage selon la revendication 3, caractérisé par le fait que, pour l'entraînement et pour l'appui du fond de raclage (21), ce que l'on appelle une roue à barres (26) est posée à l'une de ses extrémités, ses barres (26a) étant à chaque fois en prise entre deux des barres (25) du fond de raclage, et les bras (27a) des cylindres d'appui en forme d'étoiles (27) l'étant à chaque fois sous les articulations (24).

5. Dispositif de hachage selon les revendications 3 et 4, caractérisé par le fait qu'est associé au fond de raclage (21), à l'une de ses extrémités, un dispositif de raclage muni d'une vis sans fin de déplacement qui agit latéralement dans un canal ou similaire.

6. Dispositif de hachage selon l'une des revendications 1 à 5, caractérisé par l'adjonction à la carrosserie de chargement ou au châssis (1a), respectivement, d'un dispositif de roulement (14), ainsi que d'un dispositif propre de prise du chargement, et par l'adjonction à l'ensemble de hachage (5, 6), du côté des appareils ou du véhicule, respectivement, de couteaux (28, 29) qui sont de préférence pivotants.

Fig. 1

Fig. 2